# EUROPEAN PATENT SPECIFICATION

(11) **EP 3 121 642 B1**
(45) Date of publication and mention of the grant of the patent: **08.05.2019**
(21) Application number: 15764757.9
(22) Date of filing: 20.03.2015
(51) Int. Cl.: G02C 1/08

(54) **EYEGLASS FRAME COUPLING STRUCTURE**
BRILLENRAHMENKOPPLUNGSSTRUKTUR
STRUCTURE DE COUPLAGE DE MONTURE DE LUNETTES

(30) Priority: 21.03.2014 KR 20140033407
(43) Date of publication of application: 25.01.2017
(73) Proprietor: Kim, Young Ho, Gyeongsan-si, Gyeongsangbuk-do 712-844 (KR)
(72) Inventor: Kim, Young Ho, Gyeongsan-si, Gyeongsangbuk-do 712-844 (KR)
(74) Representative: Cabinet Chaillot
(86) International application number: PCT/KR2015/002718
(87) International publication number: WO 2015/142096

(56) References cited:
- WO-A1-2012/160154
- JP-A- 2001 133 731
- JP-U- S5 458 140
- KR-A- 20110 016 600
- KR-U- 20000 002 819
- KR-U- 20110 001 995
- KR-Y1- 200 199 592
- US-A- 2 103 421
- US-A- 6 099 118

## Description

### [Technical Field]

The present invention relates to an eyeglass frame coupling structure wherein one side of an eyeglass frame, to which a lens is fitted, can be separated into upper and lower parts in such a manner as to be fixedly coupled to each other by means of a screw, while the screw is being not exposed to the front of the eyeglass, thereby providing a good outer appearance and a simple and firm fixing structure capable of easily detachably attaching the lens to the eyeglass frame.

### [Background Art]

An eyeglass frame, which is generally made of a metal material, is provided wherein one side of the eyeglass frame supporting a lens is separably formed and the separably connected portions have protrusions formed engaged with each other on both sides thereof, so that the separably connected portions are fastened to each other by means of a fixing screw passing through the protrusions.

In the conventional connection portion coupling structure of the metal eyeglass frame, however, the fixing screw and the protrusions protrude from the eyeglass frame, thereby providing a bad outer appearance of the eyeglass frame, and further, the fixing screw is screw-fastened to the protrusions formed on both sides of the connection portion, so that when the lens is fitted to or separated from the eyeglass frame, the fixing screw should rotate many times so as to completely escape from the protrusions, thereby causing the fitting and separating operations of the lens to be carried out in a relatively complicated manner.

JP 2001 133731 A discloses an eyeglass frame coupling structure according to the preamble of claim 1.

### [Disclosure]

### [Technical Problem]

Accordingly, the present invention has been made in view of the above-mentioned problems occurring in the prior art, and it is an object of the present invention to provide an eyeglass frame coupling structure wherein a fixing screw, which serves to couple or separate a connection portion of a metal eyeglass frame, is not exposed to the front of the eyeglass frame, and the connection portion of the eyeglass frame is separated even when the fixing screw rotates to a small extent such that the fixing screw does not escape from the connection portion of the eyeglass frame, thereby ensuring that a lens is easily fitted to or separated from the eyeglass frame and further guaranteeing that the lens is firmly fixed to the eyeglass frame.

### [Technical Solution]

To accomplish the above-mentioned object, according to the present invention, there is provided an eyeglass frame coupling structure as defined in claim 1.

### [Advantageous Effects]

According to the present invention, wherein the fixing screw is not coupled to the receiving portion in a screw fastening type, but is simply inserted into the fixing groove, such that coupling is made easy, fastening is completed by fastening the fixing screw to a small extent in which the fixing screw does not escape from the eyeglass frame, and the fixing screw is not exposed to the front of the eyeglass frame, thereby providing an excellent outer appearance.

### [Description of Drawings]

FIG.1 is an exploded perspective view showing an eyeglass frame coupling structure according to the present invention, wherein a connection portion of an eyeglass frame is in a separated state.
FIG.2 is a perspective view showing the eyeglass frame coupling structure according to the present invention, wherein the connection portion of the eyeglass frame is in a connected state.
FIG.3 is an exploded perspective view of a portion A of FIG.1.
FIG.4 is a longitudinal sectional view showing the eyeglass frame coupling structure according to the present invention, wherein the connection portion of the eyeglass frame is in a separated state.
FIG.5 is a longitudinal sectional view showing the eyeglass frame coupling structure according to the present invention, wherein the connection portion of the eyeglass frame is in a connected state.
FIG.6 is a cross-sectional view showing the eyeglass frame coupling structure according to the present invention, wherein the connection portion of the eyeglass frame is in a connected state.
FIG.7 is a cross-sectional view showing the state before a fixing screw is completely fastened to the connection portion of the eyeglass frame.
FIG.8 is a front view showing the eyeglass frame coupling structure according to the present invention, wherein the connection portion of the eyeglass frame is formed on a bridge of the eyeglasses.
FIG.9 is a perspective view showing the eyeglass frame coupling structure according to the present invention, wherein the connection portion of the eyeglass frame is formed on an end piece of the eyeglass frame.
FIG.10 is an exploded perspective view showing the state where another type fixing screw is fastened to the connection portion of the eyeglass frame in the eyeglass frame coupling structure according to the present invention.
FIG.11 is an exploded perspective view showing the state where the receiving portion and the protruding portion are changed in position in the eyeglass frame coupling structure according to the present invention.

**[Explanation on reference numerals in the drawings]**

| | |
|---|---|
| 1: lens | 10: eyeglass frame |
| 11: receiving portion | 12: protruding portion |
| 13: fixing screw | a: receiving cavity |
| b: fixing recess | c: engaging groove |
| d: protrusion | e: engaging step |
| f: screw hole | |

### [Best Mode for Invention]

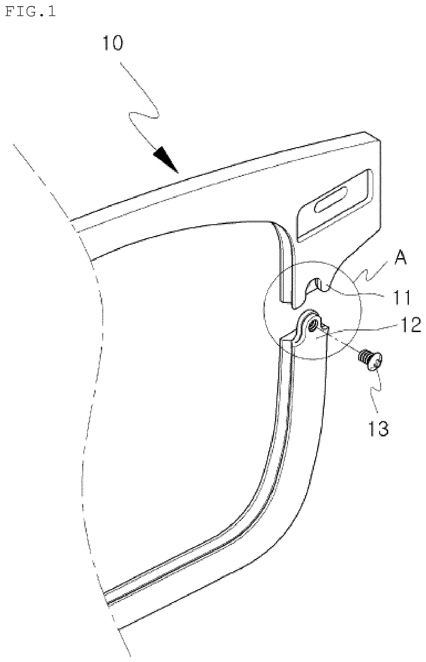

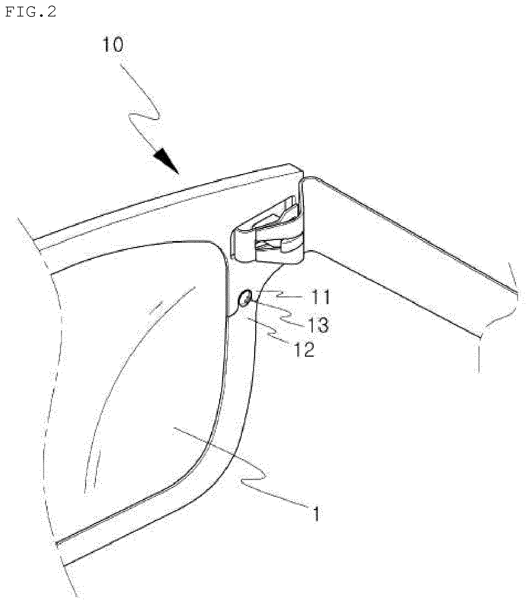

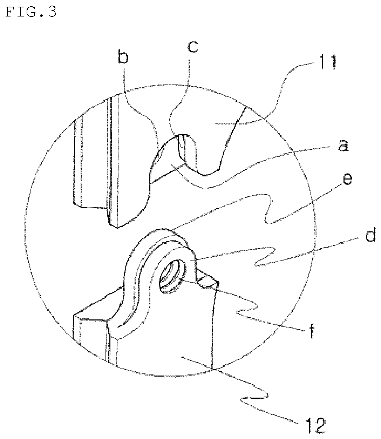

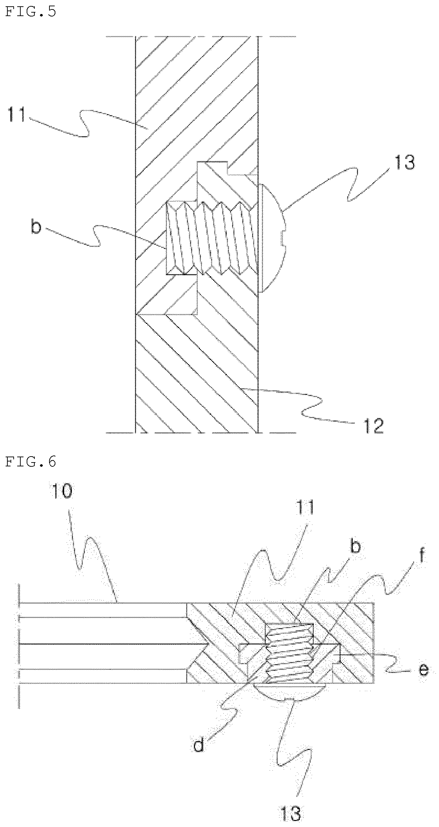

As shown in FIGS.1 to 7, an eyeglass frame coupling structure is configured wherein an eyeglass frame 10, which has an insertion groove formed along the inner edge thereof so as to fit the outer edge of a lens 1, is separably connected on a given portion thereof, and the eyeglass frame coupling structure includes: a receiving portion 11 having a receiving cavity a formed open on one side rear surface of the separable connection portion thereof towards the connection portion and the rear side thereof, a fixing recess b formed on the bottom of the receiving cavity a exposed to the rear side, and an engaging groove c formed on a surface that forms the outer peripheral side wall of the receiving cavity a; a protruding portion 12 having a protrusion d formed on the rear surface of the other side of the connection portion of the eyeglass frame 10, which abuts the receiving portion 11, so as to be inserted into the receiving portion 11, an engaging step e protruding outwardly from the outermost peripheral portion of the protrusion d in such a manner as to be inserted into the engaging groove c, and a screw hole f formed in the middle of the protrusion d in the forward/backward direction so as to communicate with the fixing recess b; and a fixing screw 13 screw-fastened to the screw hole f of the protruding portion 12 such that an end of the fixing screw 13 is inserted into the fixing recess b of the receiving portion 11.

Under the above-mentioned configuration of the eyeglass frame coupling structure according to the present invention, the outer edge of the lens 1 is fitted to the insertion groove formed on the inner side of the eyeglass frame 10, and if the protruding portion 12 pushes toward the receiving portion 11, the protrusion d is guided by the receiving cavity a to allow the connection portion of the eyeglass frame 10 to move to a precisely set position. After that, the engaging step e of the protruding portion 12 is inserted into the engaging groove c of the receiving portion 11 to allow the movements of the connection portion of the eyeglass frame 10 to be limited in every direction. At this time, the screw hole f of the protruding portion 12 is in the same line as the fixing recess b of the receiving portion 11, and if the fixing screw 13 is screw-fastened to the screw hole f, the end of the fixing screw 13 is inserted into the fixing recess b to allow the horizontal movements of the connection portion of the eyeglass frame 10 to be limited, so that the coupling state of the receiving portion 11 and the protruding portion 12 can be firmly maintained.

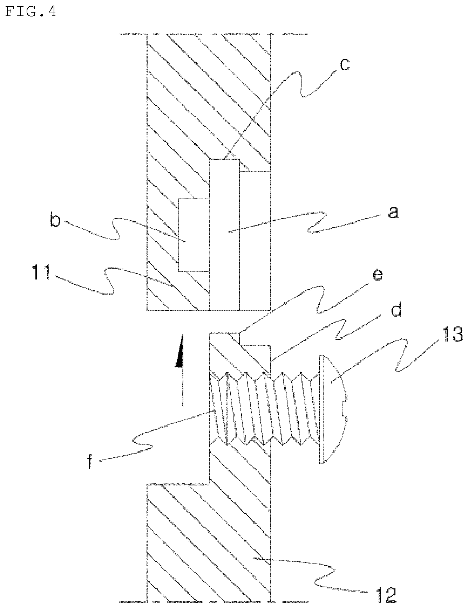

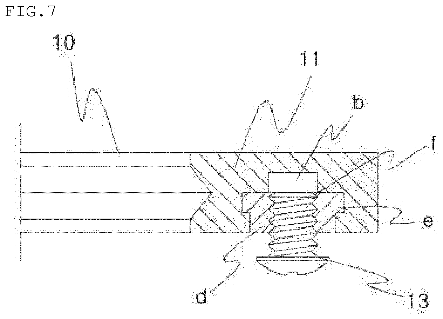

On the other hand, as shown in FIGS.4 and 7, if the fixing screw 3 is somewhat unfastened to separate the connection portion of the eyeglass frame 10, the end of the fixing screw 13 escapes from the fixing recess b and is fixed to the screw hole f of the protruding portion 12, so that the connection portion of the eyeglass frame 10 can be separated into upper and lower parts.

That is, even if the fixing screw 13 is completely unfastened from the screw hole f, the receiving portion 11 and the protruding portion 12 of the eyeglass frame 10 are separated from each other, so that the lens 1 can be easily detachably attached to the eyeglass frame 10.

In this case, the receiving cavity a of the receiving portion 11 is formed to the intermediate depth of the thickness of the eyeglass frame 10 from the rear surface of the eyeglass frame 10 in such a manner as to be open toward the connection portion of the eyeglass frame 10. Also, the receiving cavity a is formed curved on the inner side thereof, and the engaging groove c is formed along the curved portion of the receiving groove c.

The protrusion d of the protruding portion 12 has a thickness from the rear surface of the connection portion of the eyeglass frame 10 to the intermediate portion thereof in such a manner as to protrude toward the receiving portion 11, and also, the protrusion d is formed curved with the same radius as the receiving groove a.

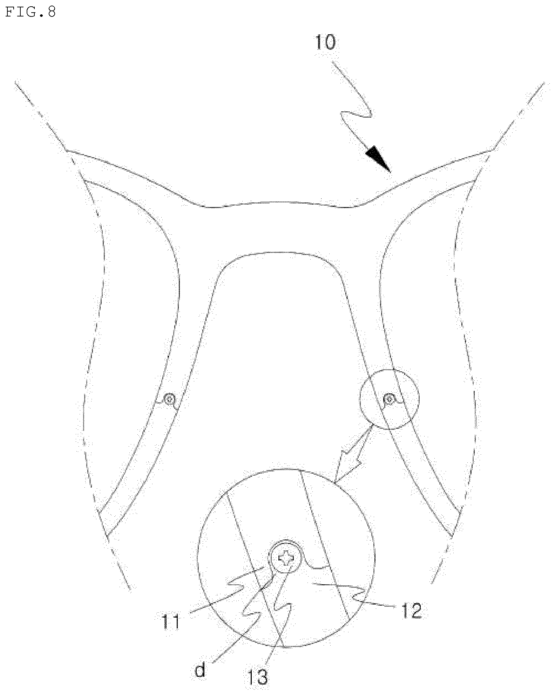

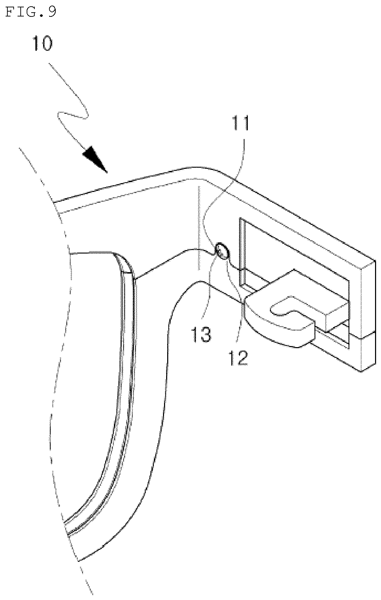

On the other hand, as shown in FIG.8, the connection portion of the eyeglass frame 10 in the eyeglass frame coupling structure according to the present invention may be formed on a portion of the center of the eyeglass frame 10 to which a bridge is coupled. Otherwise, as shown in FIG.9, both side ends of the eyeglass frame 10 are separated into upper and lower parts, and the connection portion of the eyeglass frame coupling structure according to the present invention may be formed on a backwardly extended eyeglass frame portion. Of course, the connection portion of the eyeglass frame 10 may be formed on other portions thereof.

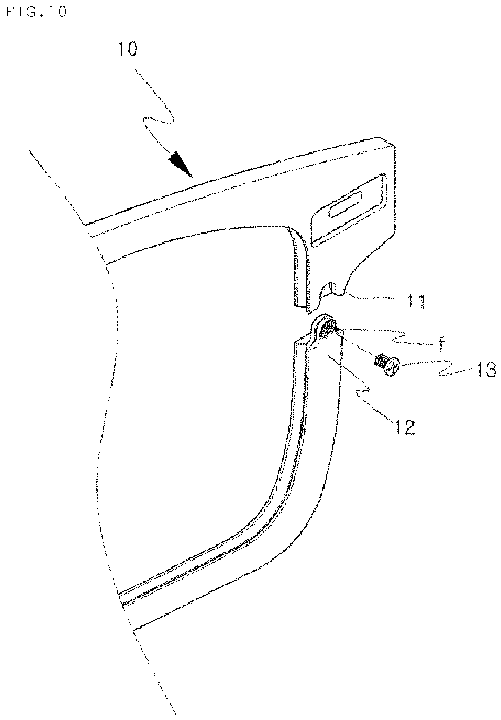

Further, the fixing screw 13 has a concave head, and otherwise, as shown in FIG.10, the screw hole f has an extended entrance, while the fixing screw 13 has a flat head, so that if the fixing screw 13 is fastened to the screw hole f, it has the same horizontal surface as the eyeglass frame 10.

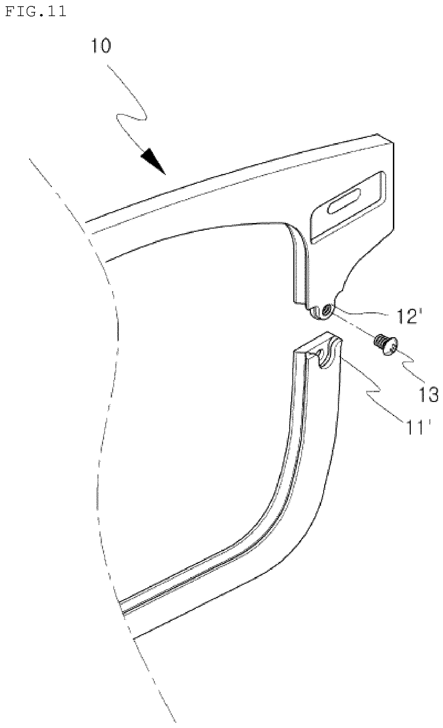

According to the present invention, on the other hand, the side portions of the eyeglass frame connected to temples are separated into upper and lower parts, so that the receiving portion is formed on the upper part and the protruding portion on the lower part. According to another embodiment of the present invention, as shown in FIG.11, a protruding portion 12' is formed on the upper portion of the connection portion and a receiving portion 11' on the lower portion of the connection portion.

According to yet another embodiment (not shown) of the present invention, further, a portion or the whole of one side rear surface of an eyeglass frame connected laminatedly is incised to a given depth, so that an engaging groove is formed on a portion at which the step is formed, and a fixing recess is formed on the incised portion. Further, a portion or the whole of the other side front surface of the eyeglass frame connected laminatedly is incised, so that an engaging step inserted into the engaging groove is formed protruding from the outer periphery of the incised portion, and a screw hole is formed on the intermediate portion of the engaging step in such a manner as to communicate with the fixing recess.

## Claims

1. An eyeglass frame coupling structure having a separable connection portion formed on a given position of an eyeglass frame (10), which fixes the outer edge of a lens (1) thereto, so that if the connection portion is separated, the lens (1) is separated from the eyeglass frame (10), and if the connection portion is connected, the lens (1) is fitted to the eyeglass frame (10), wherein the separable connection portion is separable into a lower part and an upper part, each having a rear surface as well as an end surface that is directed towards the end surface of the other part, the eyeglass frame coupling structure comprising:
a receiving portion (11) formed in one of said two parts of the separable connection portion and a protruding portion (12) formed on the other of said two parts and adapted to abut the receiving portion (11), wherein the receiving portion (11) has a receiving cavity (a) which opens on the end surface of the respective part and the protruding portion (12) has a protrusion (d) adapted to be received in the receiving cavity (a) and a screw hole (f) formed in the forward/backward direction in the protrusion (d),
**characterised in that**:
the receiving cavity (a) opens continuously on the end surface and rear surface of the respective part of the separable connection portion, and has a bottom wall facing the opening of the receiving cavity (a) on said rear surface,
an engaging groove (c) is formed incised to a given depth on a portion or the whole portion of each side wall of the receiving cavity (a), starting from the end surface of the respective part of the separable connection portion,
a fixing recess (b) is formed on said bottom wall of the receiving cavity (a),
the protrusion (d) is in the extension of the rear surface of the protruding portion (12), and thus forms part of the rear surface of the respective part of the separable connection portion,
an engaging step (e) is formed protruding outwardly from the outermost peripherial portion of the protrusion (d) in such a manner as to be insertable into the engaging groove (c), and
the eyeglass frame coupling structure further comprises a fixing screw (13) adapted to be screw-fastened to the screw hole (f),
whereby, when the separable connection portion is connected, the engaging step (e) is inserted into the engaging groove (c), the protrusion (d) extends in the opening of the receiving cavity (a) on the rear surface of the respective part of the separable connection portion and the screw hole (f) communicates with the fixing recess (b), the fixing screw (13) being adapted so that an end of the fixing screw (13) is just inserted into the fixing groove (b), thus preventing the separable connection portion of the eyeglass frame (10) from protruding outwardly from the eyeglass frame (10).

## Patentansprüche

1. Brillenfassungskoppelstruktur mit einem trennbaren Verbindungsabschnitt, der in einer bestimmten Position einer Brillenfassung (10) ausgebildet ist und die Außenkante eines Brillenglases (1) daran befestigt, so dass, wenn der Verbindungsabschnitt getrennt ist, das Brillenglas (1) von der Brillenfassung (10) getrennt ist, und, wenn der Verbindungsabschnitt verbunden ist, das Brillenglas (1) in die Brillenfassung (10) eingepasst ist, wobei der trennbare Verbindungsabschnitt in einen unteren Teil und einen oberen Teil getrennt werden kann, die jeweils eine Rückfläche sowie eine Endfläche aufweisen, die zur Endfläche des anderen Teils gerichtet ist, wobei die Brillenfassungskoppelstruktur umfasst:
eine Aufnahmeabschnitt (11), der in einem der zwei Teile des trennbaren Verbindungsabschnitts ausgebildet ist, und einen Vorsprungsabschnitt (12), der auf dem anderen der zwei Teile ausgebildet und zum Anliegen am Ausnahmeabschnitt (11) ausgelegt ist, wobei der Aufnahmeabschnitt (11) einen Aufnahmehohlraum (a) aufweist, der sich auf der Endfläche des jeweiligen Teils öffnet, und der Vorsprungsabschnitt (12) einen Vorsprung (d), der zur Aufnahme im Aufnahmehohlraum (a) ausgelegt ist, und ein Schraubloch (f) aufweist, das in der Vorwärts-/Rückwärtsrichtung im Vorsprung (d) ausgebildet ist,
**dadurch gekennzeichnet, dass**:
der Aufnahmehohlraum (a) sich auf der Endfläche und Rückfläche des jeweiligen Teils des trennbaren Verbindungsabschnitts durchgehend öffnet und eine Bodenwand aufweist, die der Öffnung des Aufnahmehohlraums (a) auf der Rückfläche zugewandt ist,
eine Eingriffsnut (c) ausgebildet ist, die ausgehend von der Endfläche des jeweiligen Teils der trennbaren Verbindung bis zu einer bestimmten Tiefe auf einem Abschnitt oder dem ganzen Abschnitt jeder Seitenwand des Aufnahmehohlraums (a) eingeschnitten ist,
eine Befestigungsaussparung (b) auf der Bodenwand des Aufnahmehohlraums (a) ausgebildet ist,
der Vorsprung (d) in der Verlängerung der Rückfläche des Vorsprungsabschnitts (12) ist und daher einen Teil der Rückfläche des jeweiligen Teils des trennbaren Verbindungsabschnitts bildet,
eine Eingriffsstufe (e) ausgebildet ist, die vom äußersten Umfangsabschnitt des Vorsprungs (d) derart vorsteht, dass sie in die Eingriffsnut (c) eingeführt werden kann, und
die Brillenfassungskoppelstruktur ferner eine Befestigungsschraube (13) umfasst, die zur Verschraubung in das Schraubloch (f) ausgelegt ist,
wobei, wenn der trennbare Verbindungsabschnitt verbunden wird, die Eingriffsstufe (e) in die Eingriffsnut (c) eingeführt wird, der Vorsprung (d) sich in die Öffnung des Aufnahmehohlraums (a) auf der Rückfläche des jeweiligen Teils des trennbaren Verbindungsabschnitts erstreckt, und das Schraubloch (f) mit der Befestigungsaussparung (b) in Verbindung steht, die Befestigungsschraube (13) so ausgelegt ist, dass ein Ende der Befestigungsschraube (13) nur in die Befestigungsnut (b) eingeführt wird, wodurch verhindert wird, dass der trennbare Verbindungsabschnitt der Brillenfassung (10) von der Brillenfassung (10) nach außen vorsteht.

## Revendications

1. Structure de couplage de monture de lunettes ayant une partie de liaison séparable formée sur une position donnée d'une monture de lunettes (10), qui fixe le bord externe d'un verre (1) à celle-ci, de telle sorte que si la partie de liaison est séparée, le verre (1) est séparé de la monture de lunettes (10), et si la partie de liaison est reliée, le verre (1) est monté sur la monture de lunettes (10), la partie de liaison séparable étant séparable en une partie inférieure et une partie supérieure, chacune ayant une surface arrière ainsi qu'une surface d'extrémité qui est dirigée vers la surface d'extrémité de l'autre partie, la structure de couplage de monture de lunettes comprenant :
une partie de réception (11) formée dans l'une desdites deux parties de la partie de liaison séparable et une partie en saillie (12) formée sur l'autre desdites deux parties et apte à venir en butée sur la partie de réception (11), la partie de réception (11) ayant une cavité de réception (a) qui débouche sur la surface d'extrémité de la partie respective et la partie en saillie (12) ayant une saillie (d) apte à être reçue dans la cavité de réception (a) et un trou de vis (f) formé dans la direction avant/arrière dans la saillie (d), **caractérisée par le fait que** :
la cavité de réception (a) débouche de manière continue sur la surface d'extrémité et la surface arrière de la partie respective de la partie de liaison séparable, et a une paroi de fond dirigée vers l'ouverture de la cavité de réception (a) sur ladite surface arrière,
une rainure d'engagement (c) est formée en incision à une profondeur donnée sur une partie ou sur la totalité de chaque paroi latérale de la cavité de réception (a), en commençant à partir de la surface d'extrémité de la partie respective de la partie de liaison séparable,
un évidement de fixation (b) est formé sur ladite paroi de fond de la cavité de réception (a),
la saillie (d) est dans le prolongement de la surface arrière de la partie en saillie (12) et, de ce fait, fait partie de la surface arrière de la partie respective de la partie de liaison séparable,
un épaulement d'engagement (e) est formé en saillie vers l'extérieur à partir de la partie périphérique la plus à l'extérieur de la saillie (d) de façon à être apte à être introduit dans la rainure d'engagement (c), et
la structure de couplage de monture de lunettes comprend en outre une vis de fixation (13) apte à être fixée par vissage au trou de vis (f),
ce par quoi, lorsque la partie de liaison séparable est reliée, l'épaulement d'engagement (e) est introduit dans la rainure d'engagement (c), la saillie (d) s'étend dans l'ouverture de la cavité de réception (a) sur la surface arrière de la partie respective de la partie de liaison séparable et le trou de vis (f) communique avec l'évidement de fixation (b), la vis de fixation (13) étant adaptée de telle sorte qu'une extrémité de la vis de fixation (13) est juste introduite dans la rainure de fixation (b), empêchant ainsi la partie de liaison séparable de la monture de lunettes (10) de faire saillie vers l'extérieur à partir de la monture de lunettes (10).
